# EUROPÄISCHE PATENTSCHRIFT

(11) **EP 1 251 105 B1**
(45) Veröffentlichungstag und Bekanntmachung des Hinweises auf die Patenterteilung: **30.11.2005**
(21) Anmeldenummer: 02005464.9
(22) Anmeldetag: 09.03.2002
(51) Int. Cl.: C03B 5/235

(54) **Verfahren und Anordnung zum Beheizen von Glasschmelzöfen mit fossilen Brennstoffen**
Process and apparatus for firing a glass melting furnace using fossil fuels
Procédé et appareil pour la combustion de combustibles fossiles dans un four à fusion de verre

(30) Priorität: 18.04.2001 DE 10118880
(43) Veröffentlichungstag der Anmeldung: 23.10.2002
(73) Patentinhaber: Beteiligungen Sorg GmbH & Co. KG, D-97816 Lohr (DE)
(72) Erfinder: Becher, Jürgen, Dipl.-Ing., 01689 Weinböhla (DE); Wagner, Manfred, 97816 Lohr am Main (DE)
(74) Vertreter: Zapfe, Hans

(56) Entgegenhaltungen:
- EP-A- 0 939 059
- DE-C- 4 244 068
- US-A- 6 047 565
- J. BECHER, M. WAGNER: "Sorg second generation cascade heating system for reduction in NOx, including additional primary measures" INTERNATIONAL GLASS JOURNAL, Nr. 109, 2000, Seiten 40-43, XP008022381

## Beschreibung

Die Erfindung betrifft ein Verfahren zum Beheizen von Glasschmelzöfen nach dem Oberbegriff des Patentanspruchs 1 und eine Anordnung nach dem Oberbegriff des Patentanspruchs 14.

Kernprobleme beim Bau und Betrieb von Glasschmelzöfen sind außer einer Senkung des spezifischen Energieverbrauchs pro Tonne Glas (energetische Optimierung) die Verringerung der Umweltbelastung und die Erhaltung des Ofenzustandes. Zu den umweltbelastenden Komponenten der Abgase gehören vorrangig das NOₓ und CO, beides hochgiftige Verbindungen, aber auch Ruß und Kohlenwasserstoffe.

Es ist zum besseren Verständnis der Probleme bei Glasschmelzöfen mit Luftvorwärmung durch Regeneratoren zweckmäßig, auf folgende Zusammenhänge hinzuweisen: Die Brennerports oder Brennerhälse werden paarweise im zyklischen Wechselrhythmus betrieben. Dies gilt sowohl für U-Flammen-Wannen, bei denen die Brennerports nebeneinander an einem Ende der Wanne angeordnet sind, als auch für Querflammen-Wannen, bei denen die Brennerports auf gegenüberliegenden Seiten der Wanne angeordnet sind. In der Brennphase wird der aus dem zugehörigen Regenerator kommenden, aufgeheizten Verbrennungsluft Brennstoff zugemischt, der den Wannenraum beheizt. Gleichzeitig wird dabei der Masse der Regenerator-Baustoffe Wärme entzogen. In der Umkehrphase werden die sehr heißen Ofenabgase durch den gleichen Brennerport oder Brennerhals wieder dem gleichen Regenerator zugeführt, und die Masse der Regenerator-Baustoffe wird wieder aufgeheizt und so fort.

Bei unterstöchiometrischen Flammen oder Flammenbereichen (mit Brennstoff-überschuß) aber wird durch unvollkommene Verbrennung Ruß gebildet, der sich im Bereich der Brennerports oder Brennerhälse ablagert. Einerseits entsteht bei nicht-stöchiometrischen Flammen oder Flammenbereichen und nachfolgendem stöchiometrischen Ausbrand ein wünschenswerter niedrigerer NOₓ-Gehalt in den Ofenabgasen, andererseits wird örtlich unerwünschter Ruß gebildet. Diese Probleme und die Maßnahmen zu ihrer Beseitigung stehen sich gewissermaßen diametral entgegen, und die vorliegende Erfindung sucht einen vorteilhaften Weg zur Lösung.

Jütte schreibt in der HVG-Mitteilung Nr. 1894 (Seiten 1894-1 bis 1894-20) über einen Vortrag vor dem Fachausschuß VI der DGG am 19. MÄrz 1997 in Würzburg unter dem Titel "Erfahrungen mit primärseitigen NOₓ-Minderungsmaßnahmen an einer regenerativ beheizten Querbrennerwanne", daß der Einfluß der Temperatur auf die NO-Bildung der stärkste von allen ist und oft den Einfluß der O₂-Konzentration überlagert.

Hein und Leuckel haben schon in der HVG-Mitteilung Nr. 1127 (Seiten 261 bis 275) über einen Vortrag am 20. Oktober 1969 geschrieben, daß nur früh und stabil zündende Flammen eine starke Rußstrahlung aufweisen. Als Abhilfe werden besondere Brennerkonstruktionen und deren Betriebsparameter angegeben.

In GASWÄRME International - 49 (2000) Heft 4/5 - April/Mai (Seiten 207 bis 212) ist ein Aufsatz von Ahmad Al-Halbouni mit dem Titel zu finden: "Kontinuierliche Luftstufung: Ein neuer Weg zur Beherrschung des Verbrennungs- und Schadstoffverhaltens von Gasflammen". Dort ist auf Seite 208 anhand eines Diagramms eine "NO-CO-Schere" erläutert, wobei aus dem Diagramm klar hervorgeht, daß bei niedrigen Brennraumtemperaturen die Bildung von CO, Ruß und CₓHₓ überwiegt, bei hohen Temperaturen die Bildung von thermischem NO und NO aus N₂O. Die Möglichkeiten einer Minimierung dieser Komponenten durch Beeinflussung der Brennraumtemperatur scheinen sich also zu widersprechen. Als Abhilfe werden auch hier besondere Brennerkonstruktionen und deren Betriebsparameter angegeben.

Nun sind bei Glas-Wannenöfen noch weitere Schmelzparameter zu berücksichtigen wie das Aufschmelzen des Chargiermaterials (Gemenge, Scherben von Altglas), das auf der Schmelze schwimmt, die anschließende Läuterung und das Abstehen der Schmelze und die Einstellung einer optimalen Schmelzentemperatur für die Weiterverarbeitung des Glases.

Durch die DE 42 18 702 C2 und die entsprechenden EP 0 577 881 B1 und US-A-5 755 846 ist es bei Glasschmelzöfen, die mit fossilen Brennstoffen beheizt werden, bekannt, zur Verminderung des Stickoxidausstoßes Flammen sowohl mit überstöchiometrischen (Sauerstoffüberschuß) als auch mit unterstöchiometrischen (Brennstoffüberschuß) Gemischen aus Brennstoffen und Oxidationsgasen in einer kaskadenförmigen Flammenanordnung zu erzeugen, wobei der endgültige Ausbrand der Flammen nach Durchmischung der Flammengase zumindest im wesentlichen stöchiometrisch erfolgt. Die Zufuhr von Primärbrennstoff, der Hauptmenge des Brennstoffbedarfs, erfolgt dabei durch eine Unterbankanordnung von Brennerdüsen, die Zufuhr von Sekundärbrennstoff durch eine seitliche Anordnung von Brennerdüsen, den sogenannten Kaskadenbrennern, in sogenannten Brennerports, durch die die Gesamtmenge der vorgewärmten Verbrennungsluft aus Regeneratoren oberhalb der Unterbankbrenner einströmt. Obwohl sich dieses Verfahren bis heute bewährt hat, geht der Wunsch der Glasindustrie in Richtung einer weiteren Verbesserung des Brennverhaltens. Die Verbrennungsluft hat nämlich die Tendenz, die Flamme des Kaskadenbrenners nach kurzem Weg in den Verbrennungsraum des Ofens abzulenken, wodurch die Vermischung der Flammengase erschwert wird.

Durch die DE 42 44 068 C1 ist es bekannt, zur Verminderung von Stickoxiden in den Abgasen eines Glasschmelzofens im Brennerhals vor dessen ofenseitigem Ende einen Stufenraum mit zwei Seitenwänden anzuordnen, durch die von mindestens einer Seite her mittels einer Brenngasdüse ein gasförmiger Brennstoff in den Stufenraum eingeblasen wird. Durch die Wirkung der Stufenkante erfolgen ein Strömungsabriß und eine Verwirbelung der durch den Brennerhals zugeführten Verbrennungsluft, und es wird eine Vorverbrennung nach Art einer Feuerwalze unter Luftmangel, d.h., mit unterstöchiometrischer Verbrennung, erzeugt, deren Rauchgase und Flammen sich als Trennschicht zwischen die durch den Brennerhals zugeführte Verbrennungsluft und die mindestens jeweils eine Flamme einer zugehörigen Unterbankfeuerung legen, wodurch die Verbrennung des Brennstoffs der Unterbankfeuerung verzögert wird. Die damit verbundene Herabsetzung der Spitzentemperaturen führt zu der besagten Reduzierung der Stickoxidentwicklung. Es hat sich jedoch gezeigt, daß durch den Luftmangel in der Feuerwalze Ruß gebildet wird, der sich mit zunehmender Dicke als Graphitschicht im Stufenraum ablagert. Bei Umkehr der Flammenrichtung lösen sich von Zeit zu Zeit plättchenförmige Graphitteile, die entgegen der vorherigen Strömungsrichtung der Luft durch den Brennerhals in den Regenerator mitgerissen werden und sich dort weiter ansammeln. Da dem Regenerator in der Regel ein mit Hochspannung betriebener Elektrofilter nachgeschaltet ist, gelangen Graphitpartikel schließlich auch in den Elektrofilter und verursachen dort Kurzschlüsse.

Durch den Aufsatz von Becher/Wagner "Die zweite Generation des Sorg Kaskadenbeheizungssystems zur NOₓ-Reduzierung in Kombination mit zusätzlichen Primärmaßnahmen", als Vortrag gehalten vor dem Fachausschuß VI der DGG (Deutsche Glastechnische Gesellschaft) am 10. Oktober 2000 in Würzburg, ist es ferner bekannt, die Kaskadenbrenner in der Seitenwand einer Stufe anzuordnen, die sich kurz vor dem ofeninneren Ende des Brennerports quer durch diesen erstreckt. Dadurch wird für die Verbrennungsluft eine Art "Windschatten" erzeugt, der eine längere Ausbildung der Kaskadenflamme quer zum Brennerport und eine bessere Durchmischung der Flammengase ermöglicht.

Es hat sich jedoch beim Betrieb derartiger Systeme gezeigt, daß in den Brennerports bzw. in den Stufen auf der Feuerseite Rußablagerungen entstehen, die zu Graphitschichten zusammensintern. Bei einer alternierenden Flammenumkehr in derartigen Öfen, die als U-Flammenwannen oder als Querflammenwannen betrieben werden können, neigen diese Graphitschichten beim Feuerwechsel durch thermische Deformation zum Abplatzen, so daß sich Graphitsplitter in den Regeneratoren ansammeln. Durch die hochkinetischen Abgase werden diese Splitter in die nachgeschalteten elektrischen Staubabscheider mitgerissen, wo sie zu Kurzschlüssen führen können. Man hat daher eine Zeit lang Erwägungen angestellt, die darauf hinausliefen, einen größeren Stickoxidgehalt in den Abgasen zugunsten einer Verringerung der Graphitbildung zuzulassen, weil angenommen werden kann, daß sich diese Forderungen grundsätzlich diametral entgegen stehen.

Durch die US-A-6 047 565 ist es zur Verringerung des NOₓ-Anteils in den Abgasen von Glasschmelzöfen u.a. bekannt, im unteren Bereich eines Brennerhalses unterhalb einer Stufe eine Unterbankfeuerung für den überwiegenden Primärbrennstoff und in einer Seitenwand oder in der senkrechten Stufenwand Sekundärbrenner für den Sekundärbrennstoff anzuordnen, der 5 bis 30 % des Primärbrennstoffs ausmacht. Um die unteren Flammen des Primärbrennstoffs auf einem Teil des Weges von den oberen Flammen des Sekundärbrennstoffs zu trennen, wird vorgeschlagen, in der senkrechten Stufenwand Düsen anzuordnen, durch die ein inertes Puffergas eingeblasen wird, das beispielsweise Kohlendioxid sein kann. Als alternative, für eine Verbrennung inerte, Puffergase werden Abgase und Rauch des Ofens vorgeschlagen. In jedem Falle sollen diese Puffergase nicht an der Verbrennung teilnehmen, um die Flammenlängen und den Ausbrand bis in die Ofenmitte zu verlagern und die Flammen zu verbreitern. Sauerstoff oder sauerstoffhaltige Gase wie Luft werden als Puffergase ausgeschlossen.

Soweit Sauerstofflanzen vorgeschlagen werden, sind diese unmittelbar über dem Schmelzenspiegel des Glases und parallel hierzu sowie unterhalb der Unterbankfeuerung angeordnet, um die Flammenlänge der Unterbankfeuerung noch weiter in die Ofenmitte zu verlagern und eine reduzierende Atmosphäre über der Glasoberfläche und eine Verfärbung des Glases zu vermeiden. Weiterhin ist angegeben, daß ein Teil der Brennstoffdüsen der Unterbankfeuerung durch Sauerstofflanzen ersetzt werden kann. In jedem Fall soll jedoch die Summe der aus den Brennerhälsen und aus den Sauerstofflanzen austretenden Sauerstoffmengen so eingestellt werden, daß weniger Sauerstoff zugeführt wird als dies für eine stöchiometrische Verbrennung erforderlich ist.

Weder ist das Problem angesprochen, Rußablagerungen in den Brennerhälsen zu vermeiden oder zu verringern, noch, eventuelle Rußablagerungen bei Umkehr der Strömungsrichtung der Abgase in die Brennerhälse und in die Regeneratoren durch Verbrennung zu vernichten und damit die Gefährdung von Elektrofiltern durch Rußsplitter auszuschalten. Insbesondere wird der beschriebenen Stufe kein Sauerstoff oder sauerstoffhaltiges Gas zugeführt, durch das dieser Effekt bewirkt werden könnte. Hierfür ist die bekannte Lösung weder vorgesehen noch geeignet.

Der Erfindung liegt daher die Aufgabe zugrunde, ein Kaskadenbeheizungssystem für Glasschmelzöfen anzugeben, bei dem die Ruß- und Graphitbildung soweit wie möglich reduziert oder ganz vermieden wird, ohne daß der Stickoxidgehalt in den Ofenabgasen unzulässig ansteigt.

Die Lösung der gestellten Aufgabe erfolgt bei dem eingangs angegebenen Verfahren erfindungsgemäß durch die Merkmale des Patentanspruchs 1 und bei der eingangs angegebenen Anordnung erfindungsgemäß durch die Merkmale des Patentanspruchs 14.

Durch diese Lösungen wird die gestellte Aufgabe in vollem Umfange gelöst. Zunächst erfolgt die seitliche Eindüsung des Sekundärbrennstoffs mit einem gegenüber dem Primärbrennstoff der Primärbrenner niedrigeren Impuls durch die Sekundärbrenner, die Kaskadenbrenner, im Schatten der Stufe oder Stufenwand, die auch als "baffle wall" bezeichnet werden kann. Die so entstehende weiche und breite Kaskadenflamme überlagert die Primärflamme(n) der Unterbankfeuerung auf der gesamten Brennerhalsbreite und mindert deren Kerntemperatur erheblich, so daß dadurch die NOₓ-Bildung reduziert wird.

Durch das zusätzliche Einspeisen oder Eindüsen von sekundärem Oxidationsgas in die Stufe ergeben sich aber überraschend die nachstehenden zusätzlichen Vorteile:
* Ruß- und Graphitvermeidung und ggf. Nachoxidation dieser Kohlenstoffe,
* Nachverbrennung von CO und anderen Kohlenstoffverbindungen,
* Beeinflußbarkeit der Wirkung der sekundären Oxidationsgase durch eine unabhängige Gebläseregelung.

Es ist im Zuge weiterer Ausgestaltungen des erfindungsgemäßen Verfahrens besonders vorteilhaft, wenn, entweder einzeln oder in Kombination, :
* in der Auslaßphase des jeweiligen Brennerhalses für die Ofenabgase bei abgeschaltetem Sekundärbrenner in die Stufe gleichfalls ein Oxidationsgas aus der Gruppe Luft, mit Sauerstoff angereicherte Luft und Sauerstoff eingeblasen wird, (Vorteil: Thermischer Schutz der Sekundärbrenner auf der abziehenden Seite; Verbrennung von ggf. vorhandenen Kohlenstoffablagerungen),
* das sekundäre Oxidationsgas im Zentrum des Sekundärbrenners in die Stufe eingeleitet wird,
* das sekundäre Oxidationsgas außerhalb des Sekundärbrenners durch die Seitenwand in die Stufe eingeleitet wird,
* das sekundäre Oxidationsgas durch die Bodenfläche der Stufe in diese eingeleitet wird,
* das sekundäre Oxidationsgas unmittelbar vor der Wandfläche der Stufe in diese eingeleitet wird,
* das sekundäre Oxidationsgas durch die Wandfläche der Stufe in diese eingeleitet wird,
* das sekundäre Oxidationsgas sowohl durch die Bodenfläche als auch durch die Wandfläche der Stufe in diese eingeleitet wird,
* dem sekundären Oxidationsgas Brennstoff beigemischt wird,
* bei Verwendung von Brenngasen das Verhältnis der Menge des Sekundärbrennstoffs zu der Menge des Primärbrennstoffs zwischen 5 und 30 Vol.-%, vorzugsweise zwischen 10 und 20 Vol.-%, gewählt wird,
* in der Brennphase das Mengenverhältnis des Sauerstoffanteils des in die Stufe eingeleiteten sekundären Oxidationsgases zum Sauerstoffanteil des durch den Brennerhals zugeführten, in den Regeneratoren vorgewärmten primären Oxidationsgases zwischen 0,5 und 2,5 gewählt wird,
* das Mengenverhältnis des während der Brennphase in die Stufe eingeleiteten sekundären Oxidationsgases zu dem während der Auslaßphase in die Stufe eingeleiteten sekundären Oxidationsgas zwischen 0,5 und 1,5, vorzugsweise zwischen 0,8 und 1,2, gewählt wird, und/oder, wenn
* das Mengenverhältnis der sekundären Oxidationsgase durch regelbare Gebläse eingestellt wird.

Es ist im Zuge weiterer Ausgestaltungen der erfindungsgemäßen Anordnung besonders vorteilhaft, wenn - entweder einzeln, oder in Kombination -:
* im Zentrum der Sekundärbrenner eine Oxidationsgaslanze für die Einleitung von sekundärem Oxidationsgas in die Stufe angeordnet ist,
* eine Oxidationsgaslanze für die Einleitung von sekundärem Oxidationsgas außerhalb des Sekundärbrenners in der Seitenwand der Stufe angeordnet ist,
* in der Bodenfläche der Stufe mindestens eine Mündung für die Einleitung von sekundärem Oxidationsgas in die Stufe angeordnet ist, insbesondere, wenn die mindestens eine Mündung unmittelbar vor der Wandfläche der Stufe angeordnet ist,
* in der Wandfläche der Stufe mindestens eine Mündung für die Einleitung von sekundärem Oxidationsgas in die Stufe angeordnet ist,
* sowohl in der Bodenfläche als auch in der Wandfläche der Stufe mindestens je eine Mündung für die Einleitung von sekundärem Oxidationsgas in die Stufe angeordnet ist,
* an dem dem Sekundärbrenner gegenüberliegenden Ende der Stufe im Stufenraum ein aus einem Feuerfestwerkstoff bestehender Formkörper zum Schutz der Seitenwand des Brennerhalses gegen die Flamme des Sekundärbrenners angeordnet ist, und/oder, wenn
* für die Einleitung der sekundären Oxidationsgase in die Stufe regelbare Gebläse vorgesehen sind.

Ein Ausführungsbeispiel des Erfindungsgegenstandes und seine Wirkungsweise werden nachfolgend anhand der Figuren 1 bis 4 näher erläutert.

Es zeigen:
- Figur 1: einen perspektivischen Einblick in einen Brennerhals,
- Figur 2: einen Vertikalschnitt entlang der Mittenebene des Brennerhalses nach Figur 1,
- Figur 3: eine Frontansicht zweier Brennerhälse nach den Figuren 1 und 2 einer U-Flammenwanne mit den zugehörigen Versorgungs- und Regeleinrichtungen für Brenn- und Oxidationsgas und
- Figur 4: eine teilweise geschnittene Seitenansicht eines Sekundärbrenners mit einer koaxialen Oxidationsgaslanze.

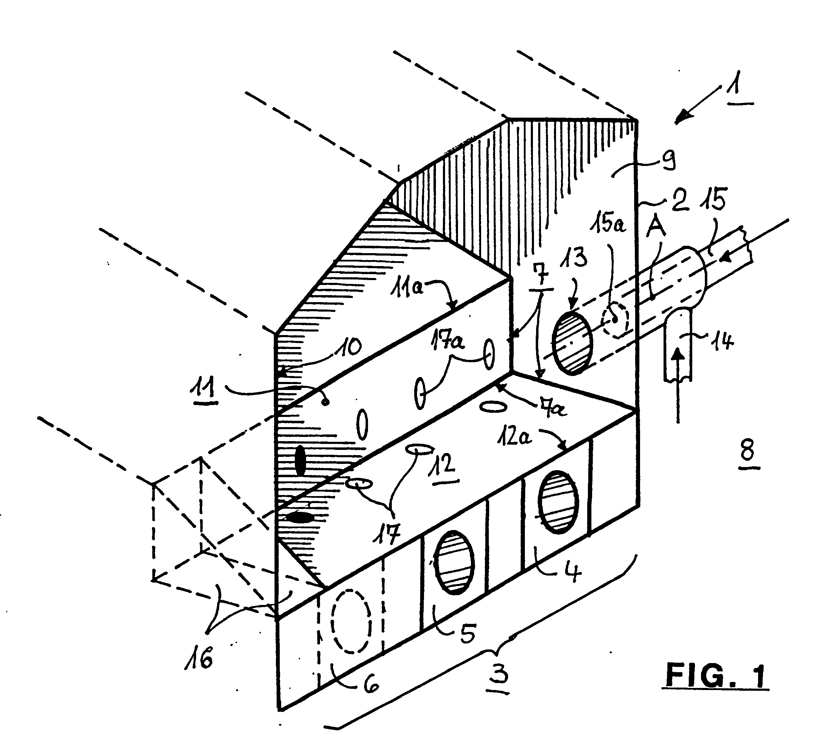

In Figur 1 ist ein Brennerhals 1 mit einem Brennermaul 2 und seinen inneren Begrenzungsflächen dargestellt. Zum Brennerhals 1 gehört eine Unterbankfeuerung 3 bekannter Bauart, die entweder zwei Primärbrenner 4 und 5 in asymmetrischer Anordnung (von der Wannenlängsmittenachse nach außen versetzt) oder drei Primärbrenner 4, 5 und 6 in symmetrischer Anordnung enthält, von denen nur die vorgelagerten Düsensteine gezeigt sind. Die Primärbrenner bestehen aus hinter diesen Düsensteinen befindlichen, nicht dargestellten Brennerdüsen für den sogenannten Primärbrennstoff, die Hauptmenge des Brennstoffs. Die Unterbankfeuerung wird in bezug auf die vorgewärmte Verbrennungsluft unterstöchiometrisch, d.h. mit Brennstoffüberschuß betrieben.

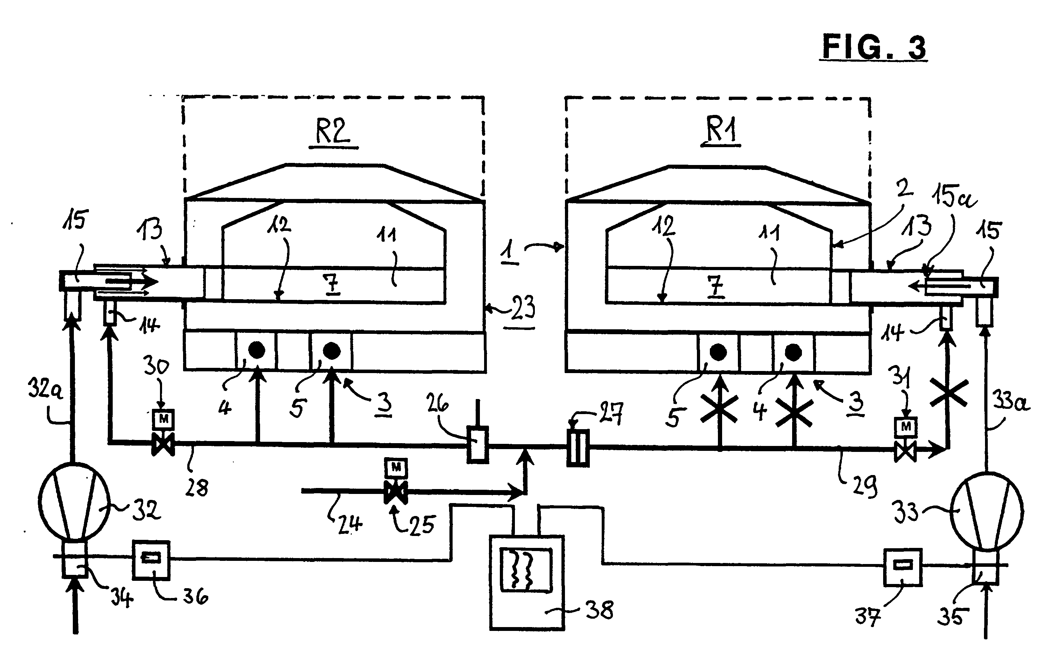

Der Brennerhals 1 steht nach hinten mit einem Regenerator R1 (gestrichelt angedeutet in Figur 3) für die Vorwärmung des primären Oxidationsgases, z.B. von Verbrennungsluft, in Verbindung, die in der Brennphase dieses Brennerhalses 1 über eine Stufe 7 in den Feuerraum 8 einer hier nicht gezeigten Wanne strömt. Der Brennerhals 1 besitzt eine äußere Seitenwand 9 und eine innere Seitenwand 10, die beide auch die Stufe 7 begrenzen. Im Bereich der Stufe 7, die einen Stufengrund 7a, eine vertikale Wandfläche 11 mit einer waagrechten Oberkante 11a und eine waagrechte Bodenfläche 12 mit einer waagrechten Vorderkante 12a besitzt, ist in der äußeren Seitenwand 9 ein Sekundärbrenner 13 angeordnet, der seinen Brennstoff, den Sekundärbrennstoff, über eine Zufuhrleitung 14 erhält und im Verhältnis zur Unterbankfeuerung 3 den sogenannten "Kaskadenbrenner" darstellt. Der diesem zugeführte Brennstoffanteil, der Kaskadenbrennstoff, liegt zwischen 5 und 30 % des gesamten Brennstoffbedarfs.

Im Sekundärbrenner 13 befindet sich koaxial eine Oxidationsgaslanze 15, durch die sekundäres Oxidationsgas (Luft, mit Sauerstoff angereicherte Luft oder Sauerstoff allein) zugeführt wird. Die Achse A von Sekundärbrenner 13 und Oxidationsgaslanze 15 verläuft im dargestellten Fall parallel zu Wand- und Bodenfläche 11 bzw. 12 der Stufe 7. Sofern durch die Oxidationsgaslanze 15 Luft zugeführt wird, beträgt die Luftmenge gegenüber dem Kaskadenbrennstoff zwischen 0,5 und 1,5, vorzugsweise 1,0. Für eine stöchiometrische Verbrennung von z.B. Erdgas mit Luft müßte die Luftmenge bei etwa 1,0 liegen. In der Flammenwurzel, d.h. am Austritt des Sekundärbrenners 13 und kurz danach, findet daher eine unterstöchiometrische Verbrennung (mit Brennstoffüberschuß) statt, die erst unter dem Einfluß des vorgewärmten primären Oxidationsgases aus dem Regenerator, das über die Stufe 7 strömt und teilweise auch durch Verwirbelung in die Stufe 7 eindringt, in eine überstöchiometrische Verbrennung (mit Sauerstoffüberschuß) umgewandelt wird. Das Verhältnis des über die Oxidationsgaslanze 15 zugeführten Sauerstoffs zu dem in der Regeneratorluft enthaltenen Sauerstoff sollte etwa zwischen 0,5 und 2,5 betragen.

Erst die Vereinigung und Durchmischung der Flammen der Unterbankfeuerung 3 einerseits und des Sekundärbrenners 13 andererseits auf dem weiteren Weg der Flammen führt zum im wesentlichen stöchiometrischen Ausbrand der Flammen. Sowohl die Primär- als auch die Sekundärflamme(n) sind im Flammenkern unterstöchiometrisch, d.h., die Flammenkerntemperaturen sind stark abgesenkt, was zu einer erheblichen Reduzierung der Stickoxidbildung führt.

Die Stufe 7 hat nun den entscheidenden Vorteil, daß die Kaskadenflamme, die ohnehin wegen der relativ zum primären Oxidationsgas aus dem Regenerator R1 geringen Gasmengen einen geringen Impuls hat, im Schutze des durch die Stufe erzeugten "Windschattens" nicht nur sehr weit über den Querschnitt des Brennerhalses vordringen kann, sondern auch von Anfang an in den Feuerraum 8 abgelenkt wird. Dies führt zu einer breiten, flachen Flamme mit überstöchiometrischem Brennverhalten. Hinzu kommt jetzt die Wirkung des durch die Oxidationsgaslanze 15 zugeführten sekundären Oxidationsgases, das zunächst innerhalb der anfänglich ringförmigen Brenngasströmung in den Stufenraum eindringt und dazu beiträgt, eine Rußbildung zu vermeiden oder zu unterdrücken.

Um ein Auftreffen der Kaskadenflamme auf die dem Sekundärbrenner 13 gegenüber liegende Seitenwand 10 des Brennerhalses 1 zu verhindern, ist innerhalb der Stufe 7 an deren Ende ein beispielsweise keilförmiger Formkörper 16 aus Feuerfestmaterial angeordnet, der sich von der Oberkante 11a bis zur Vorderkante 12a der Stufe 7 erstreckt.

Wird jetzt - nach einem Brennzyklus von beispielsweise 20 Minuten - die Flammenrichtung umgekehrt, indem die Brenngaszufuhr zur Unterbankfeuerung 3 und zum Sekundärbrenner 13, dem Kaskadenbrenner, abgeschaltet und die Zufuhr von zunächst kaltem sekundärem Oxidationsgas zur Oxidationsgaslanze 15 fortgesetzt wird, dann schützt dieses Oxidationsgas nicht nur die Teile des Brennerhalses 1 und den Sekundärbrenner 13 vor überhitzung, sondern oxidiert teilweise auch etwaige Rußablagerungen. Außerdem wird durch die Zufuhr von Oxidationsgas in die abziehenden Ofenabgase eine Nachverbrennung von CO und anderen Kohlenstoffverbindungen erzielt, bevor die Ofenabgase, in den Regenerator R1 strömen, was von entscheidender Bedeutung ist.

Ein weiterer Vorteil besteht darin, daß durch die zusätzliche Zufuhr von sekundärem Oxidationsgas im Bereich der Stufe 7 die Energieübertragung stärker in den Bereich der Gemenge- und/oder Scherbeneinlage in der Schmelzwanne vorverlagert wird, wodurch die spezifische Schmelzleistung (Durchsatz) des Ofens erhöht wird.

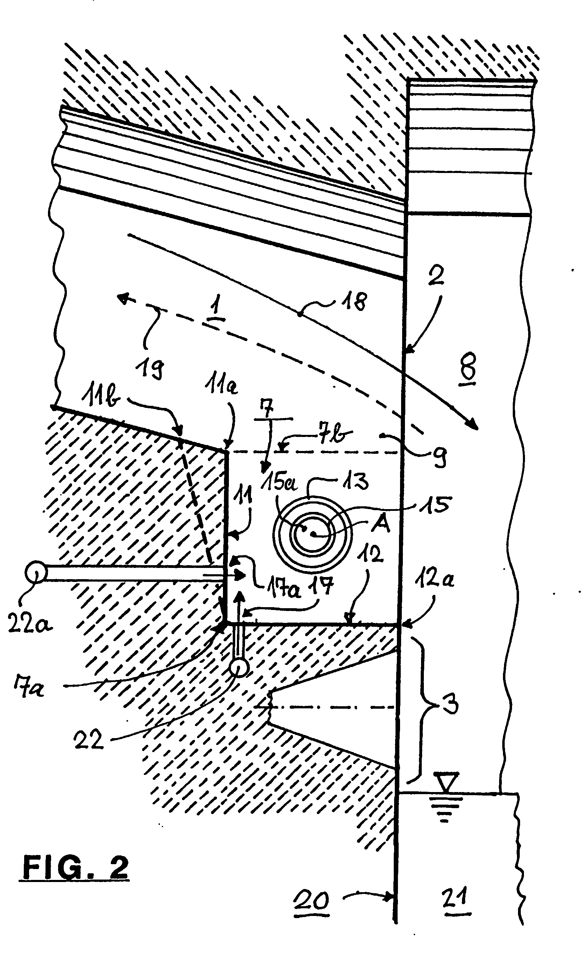

Figur 1 zeigt noch zwei alternative und/oder zusätzliche Maßnahme zur Zufuhr von sekundärem Oxidationsgas: In der Bodenfläche 12 der Stufe 7 sind dicht vor der Wandfläche 11 Mündungen 17 für die Zufuhr von sekundärem Oxidationsgas angeordnet, die ähnlich betrieben werden wie die Oxidationsgaslanze 15. Dadurch entsteht vor der Wandfläche 11 der Stufe 7 ein Schirm von Oxidationsgas mit einer analogen Wirkung auf etwaige Ruß- und/oder Graphitablagerungen und auf CO und andere Kohlenstoffverbindungen. Ferner können auch in der Wandfläche 11 selbst Mündungen 17a für die Zufuhr von sekundärem Oxidationsgas angeordnet sein, und schließlich können den durch die Mündungen 17 und/oder 17a zugeführten Oxidationsgasen auch Brennstoffe, vorzugsweise mit unterstöchiometrischen Mischungsverhältnissen, zugesetzt werden. Die Mündungen 17a sind an eine Versorgungsleitung 22a angeschlossen (Figur 2).

Figur 2 zeigt unter Verwendung der bisherigen Bezugszeichen die Einzelheiten der Figur 1 im Schnitt. In stark symbolisierter Form zeigen der Pfeil 18 die Strömungsrichtung des vorgewärmten primären Oxidationsgases aus dem Regenerator R1 in den Feuerraum 8 der Wanne 20 mit der Glasschmelze 21 in der Brennphase und und der Pfeil 19 die Strömungsrichtung der Ofenabgase nach Umkehr der Flammenrichtung aus dem Feuerraum 8 zum Regenerator R1. Die Achse A von Sekundärbrenner 13 und Oxidationsgaslanze 15 kann - in der Projektion auf die äußere Seitenwand 9 gesehen - innerhalb der Stufe 7 in einem Rechteck angeordnet sein, dessen obere Kante 7b durch eine gestrichelte Linie angedeutet ist. Verwirbelungen sind der Einfachheit halber nicht dargestellt.

Auch muß die Wandfläche 11 nicht senkrecht verlaufen; sie kann auch unter einem Winkel zur Senkrechten ausgerichtet sein, was durch die gestrichelte Wandfläche 11b angedeutet ist. Schließlich muß auch die Achse A nicht parallel zur Wandfläche 11 oder 11b und zur Bodenfläche 12 verlaufen; Winkelstellungen sind möglich. Wesentlich ist, daß dem Stufenraum sekundäres, d.h. zusätzliches Oxidationsgas zugeführt wird, was auch durch die Mündungen 17 und 17a angedeutet ist, die mit Versorgungsleitung 22 und 22a in Verbindung stehen. Auch können der Sekundärbrenner 13 und die Oxidationsgaslanze 15 voneinander getrennt in der Seitenwand 9 angeordnet sein.

Von besonderer Bedeutung ist hierbei der durch die Seitenwände 9 und 10, die Wandflächen 11 und 11b und die Bodenfläche 12 gebildete Stufenraum, der nach oben und zum Feuerraum 8 hin offen ist, ohne daß sich hierbei eine genaue imaginäre Begrenzungsfläche des Stufenraums festlegen ließe, weil Verwirbelungen der Strömung auftreten können.

Die Figur 3 zeigt unter Verwendung eines Teils der bisherigen Bezugszeichen rechts einen Brennerhals 1 nach den Figuren 1 und 2 in der Abzugsphase und links - in spiegelsymmetrischer Anordnung hierzu einen Brennerhals 23 in der Brennphase. Die Brennerhälse 1 und 23 stehen mit den gestrichelt angedeuteten Regeneratoren R1 und R2 in Verbindung. Brenngas, z.B. Erdgas, wird über eine Hauptgasleitung 24 mit einem Regelventil 25 zugeführt. Durch Wechselventile 26 und 27 läßt sich das Brenngas alternierend im Wechselzyklus auf die eine oder andere Seite umschalten. Von den Gasmengen für die Unterbankfeuerungen 3 lassen sich Teilmengen für den jeweiligen Kaskadenbrenner 13 über Zweigleitungen 28 oder 29 und Regelventile 30 oder 31 abzweigen. Im vorliegenden Fall ist die gesamte Brenngas-Versorgung zum rechten Teil abgesperrt, was durch die Kreuze angedeutet ist.

Den Oxidationsgaslanzen 15 jeder Seite ist über Leitungen 32a und 33a je ein Gebläse 32 und 33 aufgeschaltet, deren Fördermengen, beispielhaft an Umgebungsluft, über Meßblenden 34 und 35 und Transmitter 36 und 37 abgefragt und an einen Schreiber 38 weitergeleitet und aufgezeichnet werden. Die Menge an Mischluft auf der linken Seite ist in der Regel größer als die Menge an Spülluft auf der rechten Seite.

Die Figur 3 zeigt gemäß der bisherigen Beschreibung die Verhältnisse an einem Ende einer U-Flammen-Wanne. Für eine Quer-Flammen-Wanne gilt jedoch das Gleiche: Hierbei liegen sich beispielsweise Brennerhälse nach Figur 3 an den Langseiten der Wanne paarweise gegenüber; sie können jedoch auch in Längsrichtung der Wanne versetzt zueinander angeordnet sein. Durch Feuerwechsel mittels einer Umsteuerungseinrichtung wird jeder der Brennerhälse abwechselnd als Flammenquelle und als Abströmkanal für die Ofenabgase zu den Regeneratoren benutzt.

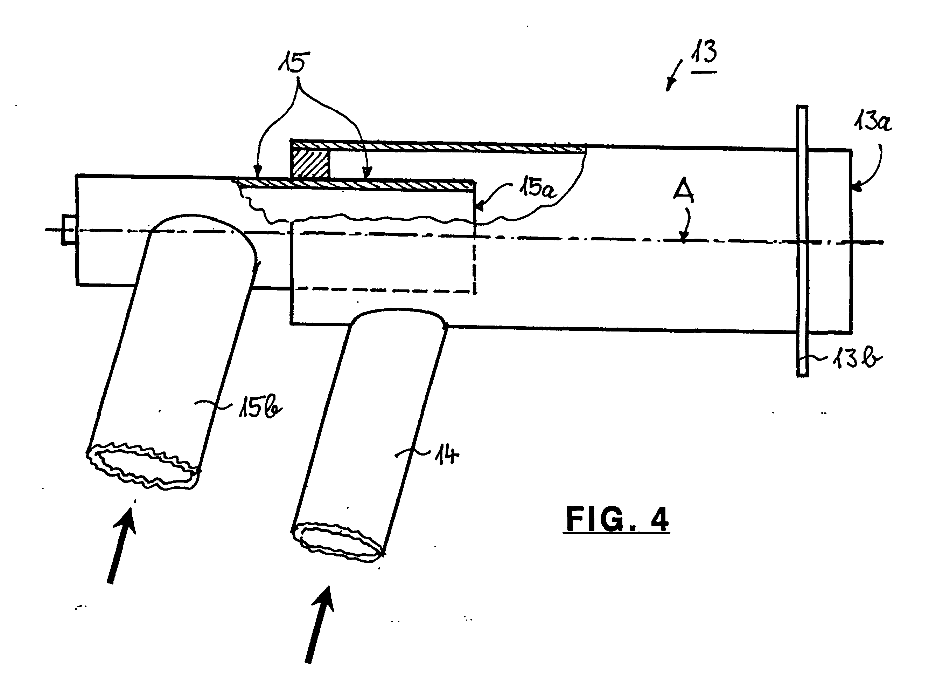

Figur 4 zeigt eine teilweise geschnittene Seitenansicht des Sekundärbrenners 13 mit der zur Achse A koaxialen Oxidationsgaslanze 15. Die Oxidationsgaslanze 15 überragt mit ihrer Mündung 15a in axialer Richtung die seitliche Zufuhrleitung 14 für den gasförmigen Sekundärbrennstoff. Das sekundäre Oxidationsgas wird über eine Zufuhrleitung 15b zugeführt. Auf die Mündung 13a des Sekundärbrenners 13 ist ein Dichtring 13b aufgesetzt.

Zur Begrenzung der Stickoxidemissionen sind verschiedene Konzepte zur Regelung von Brennstoff, Oxidationsgas (Verbrennungsluft) und den Temperaturen im Oberofen einsetzbar. Während der Brennphase werden die Wannen mit Festwert-, Temperatur- oder intelligenter Temperaturfensterregelung gefahren. Bei der Festwertregelung wird der Brennstoff konstant geregelt. Bei der Temperaturrreglung die Temperatur im Oberofen, und bei der Temperaturfensterregelung wird die Brennstoffmenge geregelt, wenn die Temperatur im Oberofen Sollwerte über- oder unterschreitet.

Die Regelung der Brennphase erfolgt bevorzugt auf folgende Weise: Der Ofen wurde zunächst über 2 bis 5 Umschaltzyklen mit einer temperaturabhängigen Regelung der gesamten Brennstoffmenge gefahren, wobei die Temperaturen im Oberofen gemessen wurden. Vorgegeben war eine Temperatur von etwa 1600 °C. Bei Verwendung von Erdgas ergaben sich dadurch Schwankungen von ± 50 bis 150 Nm³/h. Entsprechend wurden die Oxidationsgase proportional nachgeführt. Die Erdgasschwankungen führten zu instabilen Verbrennungsbedingungen und somit wechselnden Abgaswerten. Hierbei wurden die Stellgrößen der Ventile 25, 30, 31 nach Bildung ihrer Mittelwerte gespeichert. Anschließend erfolgte eine automatische Umschaltung auf eine Brennstoff-Festwertregelung, d.h. die Temperatur im Oberofen wurde kontrolliert, und es wurden feste Brennstoffmengen pro Zeiteinheit vorgegeben und von Zeit zu Zeit korrigiert. Dadurch wurde erreicht, daß die Abgaswerte für O₂ und NOₓ stark vergleichmäßigt wurden. Die NOₓ-Halbstundenmittelwerte konnten auf 603 bis 645 mg/Nm³ reduziert werden, der Tagesmittelwert lag bei 639 mg/Nm³. Rußbildungen und Graphitabscheidungen wurden nicht beobachtet. Die O₂-Werte lagen zwischen 0,2 und 0,5 %. Die Glasqualität entsprach den Vorgaben.

### Bezugszeichenliste:

- 1: Brennerhals
- 2: Brennermaul
- 3: Unterbankfeuerung
- 4: Primärbrenner
- 5: Primärbrenner
- 6: Primärbrenner
- 7: Stufe
- 7a: Stufengrund
- 7b: Linie
- 8: Feuerraum
- 9: äußere Seitenwand
- 10: innere Seitenwand
- 11: Wandfläche
- 11a: Oberkante
- 11 b: Wandfläche
- 12: Bodenfläche
- 12a: Vorderkante
- 13: Sekundärbrenner
- 13a: Mündung
- 13b: Dichtring
- 14: Zufuhrleitung
- 15: Oxidationsgaslanze
- 15a: Mündung
- 15b: Zufuhrleitung
- 16: Formkörper
- 17: Mündungen
- 17a: Mündungen
- 18: Pfeil
- 19: Pfeil
- 20: Wanne
- 21: Glasschmelze
- 22: Versorgungsleitung
- 22a: Versorgungsleitung
- 23: Brennerhals
- 24: Hauptgasleitung
- 25: Regelventil
- 26: Wechselventil
- 27: Wechselventil
- 28: Zweigleitung
- 29: Zweigleitung
- 30: Regelventil
- 31: Regelventil
- 32: Gebläse
- 32a: Leitung
- 33: Gebläse
- 33a: Leitung
- 34: Meßblende
- 35: Meßblende
- 36: Transmitter
- 37: Transmitter
- 38: Schreiber

- A: Achse
- R1: Regenerator
- R2: Regenerator

## Patentansprüche

1. Verfahren zum Beheizen von Glasschmelzöfen mit einem Feuerraum (8), mit Regeneratoren (R1, R2) für die Aufheizung von Oxidationsgasen aus der Gruppe Luft, mit Sauerstoff angereicherte Luft und Sauerstoff und mit in den Feuerraum (8) mündenden Brennerhälsen (1, 23) sowie mit Primärbrennern (4, 5, 6) als Unterbankfeuerung und Sekundärbrennern (13), die gegenüber den Primärbrennern (4, 5, 6) eine Kaskadenanordnung bilden, wobei die Brenner (4, 5, 6, 13) mit fossilen Brennstoffen betrieben werden, wobei die Primärbrenner (4, 5, 6) mit dem größeren Anteil des Brennstoffs, dem Primärbrennstoff, betrieben werden und Flammen mit einem unterstöchiometrischen Brennverhalten erzeugen, wobei die Sekundärbrenner (13) als Kaskadenbrenner mit einem relativ geringeren Anteil des Brennstoffs, dem Sekundärbrennstoff, betrieben werden und Flammen mit einem überstöchiometrischen Brennverhalten erzeugen, wobei die gebildeten Flammengase bis zum zumindest weitgehend stöchiometrischen Ausbrand im Feuerraum (8) miteinander vermischt werden, und wobei der Sekundärbrennstoff mittels der Sekundärbrenner (13) durch je eine Seitenwand (9) eines Brennerhalses (1, 23) in eine Stufe (7) eingeleitet wird, die eine Bodenfläche (12) und eine Wandfläche (11, 11b) besitzt, sich im Brennerhals (1) befindet und über die die vorgewärmten primären Oxidationsgase aus den Regeneratoren (R1, R2) in den Feuerraum (8) geleitet werden, **dadurch gekennzeichnet, daß** in der Brennphase des jeweiligen Brennerhalses (1, 23) zusätzlich zu dem über die Stufe (7) strömenden, in den Regeneratoren (R1, R2) vorgewärmtem primären Oxidationsgas ein sekundäres Oxidationsgas aus der Gruppe Luft, mit Sauerstoff angereicherte Luft und Sauerstoff in die Stufe (7) eingeblasen wird.

2. Verfahren nach Anspruch 1, **dadurch gekennzeichnet, daß** in der Auslaßphase des jeweiligen Brennerhalses (1, 23) für die Ofenabgase bei abgeschaltetem Sekundärbrenner (13) in die Stufe (7) gleichfalls ein Oxidationsgas aus der Gruppe Luft, mit Sauerstoff angereicherte Luft und Sauerstoff eingeblasen wird.

3. Verfahren nach Anspruch 1, **dadurch gekennzeichnet, daß** das sekundäre Oxidationsgas im Zentrum des Sekundärbrenners (13) in die Stufe (7) eingeleitet wird.

4. Verfahren nach Anspruch 1, **dadurch gekennzeichnet, daß** das sekundäre Oxidationsgas außerhalb des Sekundärbrenners (13) durch die Seitenwand (9) in die Stufe (7) eingeleitet wird.

5. Verfahren nach Anspruch 1, **dadurch gekennzeichnet, daß** das sekundäre Oxidationsgas durch die Bodenfläche (12) der Stufe (7) in diese eingeleitet wird.

6. Verfahren nach Anspruch 1, **dadurch gekennzeichnet, daß** das sekundäre Oxidationsgas unmittelbar vor der Wandfläche (11, 11b) der Stufe (7) in diese eingeleitet wird.

7. Verfahren nach Anspruch 1, **dadurch gekennzeichnet, daß** das sekundäre Oxidationsgas durch die Wandfläche (11, 11b) der Stufe (7) in diese eingeleitet wird.

8. Verfahren nach den Ansprüchen 5 und 7, **dadurch gekennzeichnet, daß** das sekundäre Oxidationsgas sowohl durch die Bodenfläche (12) als auch durch die Wandfläche (11, 1b) der Stufe (7) in diese eingeleitet wird.

9. Verfahren nach einem der Ansprüche 4 bis 7, **dadurch gekennzeichnet, daß** dem sekundären Oxidationsgas Brennstoff beigemischt wird.

10. Verfahren nach Anspruch 1, **dadurch gekennzeichnet, daß** bei Verwendung von Brenngasen das Verhältnis der Menge des Sekundärbrennstoffs zu der Menge des Primärbrennstoffs zwischen 5 und 30 Vol.-%, vorzugsweise zwischen 10 und 20 Vol.-%, gewählt wird.

11. Verfahren nach Anspruch 1, **dadurch gekennzeichnet, daß** in der Brennphase das Mengenverhältnis des Sauerstoffanteils des in die Stufe (7) eingeleiteten sekundären Oxidationsgases zum Sauerstoffanteil des durch den Brennerhals (1, 23) zugeführten, in den Regeneratoren (R1, R2) vorgewärmten primären Oxidationsgases zwischen 0,5 und 2,5 gewählt wird.

12. Verfahren nach Anspruch 1, **dadurch gekennzeichnet, daß** das Mengenverhältnis des während der Brennphase in die Stufe (7) eingeleiteten sekundären Oxidationsgases zu dem während der Auslaßphase in die Stufe (7) eingeleiteten sekundären Oxidationsgases zwischen 0,5 und 1,5, vorzugsweise zwischen 0,8 und 1,2, gewählt wird.

13. Verfahren nach mindestens einem der Ansprüche 1 bis 12, **dadurch gekennzeichnet, daß** das Mengenverhältnis der sekundären Oxidationsgase durch regelbare Gebläse (32, 33) eingestellt wird.

14. Anordnung zum Beheizen von Glasschmelzöfen mit einem Feuerraum (8), mit Regeneratoren (R1, R2) für die Aufheizung von primären Oxidationsgasen aus der Gruppe Luft, mit Sauerstoff angereicherte Luft und Sauerstoff und mit in den Feuerraum (8) mündenden Brennerhälsen (1, 23) sowie mit Primärbrennern (4, 5, 6) als Unterbankfeuerung (3) und Sekundärbrennern (13), die gegenüber den Primärbrennern (4, 5, 6) eine Kaskadenanordnung bilden, wobei die Sekundärbrenner (13) als Kaskadenbrenner in je einer Seitenwand (9) eines Brennerhalses (1, 23) in einer Stufe (7) angeordnet sind, die eine Bodenfläche (12) und eine Wandfläche (11, 11b) besitzt und sich im Brennerhals (1) befindet, und wobei die Anordnung eine Umsteuerungseinrichtung für eine periodische Umsteuerung der Brennerhälse (1, 23) zwischen Brennphase und Abzugsphase besitzt,
**dadurch gekennzeichnet, daß**
a) in mindestens einer der Begrenzungswände der Stufe (7) mindestens eine Zufuhreinrichtung aus der Gruppe Oxidationsgaslanze (15) und Mündung (15a, 17, 17a) für die Einleitung von sekundären Oxidationsgasen aus der Gruppe Luft, mit Sauerstoff angereicherter Luft und Sauerstoff in die Stufe (7) angeordnet ist und
b) die Umsteuerungseinrichtung so ausgelegt ist, daß die Einleitung der sekundären Oxidationsgase in die Stufe (7) während der Abzugsphase der Ofenabgase aus dem Feuerraum (8) in den zugehörigen Regenerator (R1, R2) wahlweise einschaltbar, ausschaltbar oder regelbar ist.

15. Anordnung nach Anspruch 14, **dadurch gekennzeichnet, daß** im Zentrum der Sekundärbrenner (13) eine Oxidationsgaslanze (15) für die Einleitung von sekundärem Oxidationsgas in die Stufe (7) angeordnet ist.

16. Anordnung nach Anspruch 14, **dadurch gekennzeichnet, daß** eine Oxidationsgaslanze (15) für die Einleitung von sekundärem Oxidationsgas außerhalb des Sekundärbrenners (13) in der Seitenwand (9) der Stufe (7) angeordnet ist.

17. Anordnung nach Anspruch 14, **dadurch gekennzeichnet, daß** in der Bodenfläche (12) der Stufe (7) mindestens eine Mündung (17) für die Einleitung des sekundären Oxidationsgases in die Stufe (7) angeordnet ist.

18. Anordnung nach Anspruch 17, **dadurch gekennzeichnet, daß** die mindestens eine Mündung (17) unmittelbar vor der Wandfläche (11, 11b) der Stufe (7) angeordnet ist.

19. Anordnung nach Anspruch 14, **dadurch gekennzeichnet, daß** in der Wandfläche (11, 11b) der Stufe (7) mindestens eine Mündung (17a) für die Einleitung des sekundären Oxidationsgases in die Stufe (7) angeordnet ist.

20. Anordnung nach Anspruch 14, **dadurch gekennzeichnet, daß** sowohl in der Bodenfläche (12) als auch in der Wandfläche (11, 11b) der Stufe (7) mindestens je eine Mündung (17, 17a) für die Einleitung des sekundären Oxidationsgases in die Stufe (7) angeordnet ist.

21. Anordnung nach mindestens einem der Ansprüche 14 bis 20, **dadurch gekennzeichnet, daß** an dem dem Sekundärbrenner (13) gegenüberliegenden Ende der Stufe (7) im Stufenraum ein aus einem Feuerfestwerkstoff bestehender Formkörper (16) zum Schutz der Seitenwand (10) des Brennerhalses (1) gegen die Flamme des Sekundärbrenners angeordnet ist.

22. Anordnung nach mindestens einem der Ansprüche 14 bis 21, **dadurch gekennzeichnet, daß** für die Einleitung der sekundären Oxidationsgase in die Stufe (7) regelbare Gebläse (32, 33) vorgesehen sind.

## Claims

1. Process for firing glass melting furnaces with a furnace area (8), with regenerators (R1, R2) for heating oxidation gases from the group air, oxygen enriched air and oxygen and with burner necks (1, 23) which terminate in the furnace area (8) as well as primary burners (4, 5, 6) as lower bank furnace and secondary burners (13) which relative to the primary burners (4, 5, 6) form a cascade arrangement, and the burners (4, 5, 6, 13) are operated by fossil fuels, and the primary burners (4, 5, 6) are operated by the larger proportion of the fuel, the primary fuel, and flames with an understochiometric burning behaviour are produced, and the secondary burners (13) are operated as cascade burners with a relatively low proportion of the fuel, the secondary fuel, and flames with an upperstochiometric burning behaviour are produced, and developed flame gases are mixed up to at least extensive stochiometric burn out in the furnace area (8), and the secondary fuel is ducted by means of the secondary burner (13) through a respective sidewall (9) of a burner neck (1, 23) into a step (7) which comprises a base surface (12) and a wall surface (11, 11b) and which is located in the burner neck (1) and via which preheated primary oxidation gases are ducted from the regenerators (R1, R2) into the furnace area (8), **characterised in that** in the burning phase of a respective burner neck (1, 23) is blown, in addition to the primary oxidation gas which flows via the step (7) and is preheated in the regenerators (R1, R2), a secondary oxidation gas of the group of air, oxygen enriched air and oxygen into step (7).

2. Process according to Claim 1, **characterised in that** in the outlet phase of a respective burner neck (1, 23) for furnace waste gases with secondary burner (13) switched off is also blown into the step (7) an oxidation gas of the group air, oxygen enriched air and oxygen.

3. Process according to Claim 1, **characterised in that** the secondary oxidation gas is introduced into the step (7) in the centre of the secondary burner (13).

4. Process according to Claim 1, **characterised in that** the secondary oxidation gas is introduced into the step (7) outside the secondary burner (13) via the side wall (9).

5. Process according to Claim 1, **characterised in that** the secondary oxidation gas is introduced into the step (7) via its base surface (12).

6. Process according to Claim 1, **characterised in that** the secondary oxidation gas is introduced into step (7) directly ahead of its wall surface (11, 11b).

7. Process according to Claim 1, **characterised in that** the secondary oxidation gas is introduced into the step (7) via the wall surface (11, 11b).

8. Process according to Claims 5 and 7, **characterised in that** the secondary oxidation gas is introduced into the step (7) via its base surface (12) as well as the wall surface (11, 1b).

9. Process according to one of Claims 4 to 7, **characterised in that** fuel is mixed into the secondary oxidation gas.

10. Process according to Claim 1, **characterised in that**, when combustion gases are used, the ratio of the volume of secondary fuel relative to the volume of primary fuel has been selected between 5 and 30 vol-%, preferably between 10 and 20 vol-%.

11. Process according to Claim 1, **characterised in that** in the combustion phase the volume ratio of the oxygen proportion of secondary oxidation gases introduced in the step (7) relative to the oxygen proportion of primary oxidation gas introduced via the burner neck (1, 12) and preheated in the regenerators (R1, R2) is chosen between 0.5 and 2.5.

12. Process according to Claim 1, **characterised in that** the volume ratio of secondary oxidation gas introduced into the step (7) during the combustion phase relative to the secondary oxidation gas introduced into the step (7) during the outlet phase is chosen between 0.5 and 1.5, preferably between 0.8 and 1.2.

13. Process according to at least one of Claims 1 to 12, **characterised in that** the ratio of secondary oxidation gases is set by regulated blowers (32, 33).

14. Arrangement for heating glass melting furnaces with a furnace area (8), with regenerators (R1, R2) for heating primary oxidation gases of the group air, oxygen enriched air and oxygen and with burner necks (1, 23) terminating in the furnace area (8) and with primary burners (4, 5, 6) as lower bank furnace (3) and secondary burners (13) which form opposite the primary burners (4, 5, 6) a cascade arrangement, and the secondary burners (13) are arranged as cascade burners in a respective side wall (9) of a burner neck (1, 23) in a step (7), which comprises a base surface (12) and a wall surface (11, 11b) and which is located in the burner neck (1), and the arrangement includes a redirection device for periodic redirection of the burner necks (1, 23) between combustion phase and extraction phase, **characterised in that**
a: in at least one of the defining walls of the step (7) is arranged at least one delivery device of the group oxidation gas lance (15) and mouth (15a, 17, 17a) for introduction of secondary oxidation gases of the group air, with oxygen enriched air and oxygen into the step (7); and
b: the re-direction device is designed in such a manner that during the extraction phase of the furnace waste gases from the furnace area (8) into the associated regenerator (R1, R2) introduction of secondary oxidation gases into the step (7) can be selectively switched on, switched off or regulated.

15. Arrangement according to Claim 14, **characterised in that** in the centre of the secondary burners (13) is arranged an oxidation gas lance (15) for introduction of secondary oxidation gas into the step (7).

16. Arrangement according to Claim 14, **characterised in that** an oxidation gas lance (15) for introduction of secondary oxidation gas is arranged outside the secondary burner (13) in the side wall (9) of the step (7).

17. Arrangement according to Claim 14, **characterised in that** in the base surface (12) of the step (7) is arranged at least one mouth (17) for introduction of the secondary oxidation gas into the step (7).

18. Arrangement according to Claim 17, **characterised in that** the at least one mouth (17) is arranged directly in front of the wall surface (11, 11b) of the step (7).

19. Arrangement according to Claim 14, **characterised in that** in the wall surface (11, 11b) of the step (7) is arranged at least one mouth (17a) for introduction of secondary oxidation gas into the step (7).

20. Arrangement according to Claim 14, **characterised in that** both in the base surface (12) and in the wall surface (11, 11b) of the step (7) is arranged at least one respective mouth (17, 17a) for introduction of secondary oxidation gas into the step (7).

21. Arrangement according to at least one of Claims 14 to 20, **characterised in that** at the end of the step (7) opposite the secondary burner (13) is arranged in the step area a shape (16) of refractory material for protection of the side wall (10) of the burner neck (1) against the flame of the secondary burner.

22. Arrangement according to at least one of Claims 14 to 21, **characterised in that** controllable blowers (32, 33) are provided for introduction of the secondary oxidation gases into the step (7).

## Revendications

1. Procédé et agencement pour chauffer des fours de verrerie avec un foyer (8) avec des régénérateurs (R1, R2) pour le réchauffement de gaz d'oxydation faisant partie du groupe de l'air, de l'air enrichi en oxygène et de l'oxygène et avec des becs de brûleurs (1, 23) débouchant dans le foyer (8), ainsi qu'avec des brûleurs primaires (4, 5, 6) en tant que chauffage de l'autel inférieur et avec des brûleurs secondaires (13), qui par rapport aux brûleurs primaires (4, 5, 6) forment un agencement en cascade, les brûleurs (4, 5, 6, 13) étant exploités avec des combustibles fossiles, les brûleurs primaires (4, 5, 6) étant exploités avec la plus grande fraction du combustible, le combustible primaire et générant des flammes avec un comportement de combustion sous-stoechiométrique, les brûleurs secondaires (13) étant exploités en tant que brûleurs en cascade avec une fraction relativement faible du combustible, le combustible secondaire et générant des flammes avec un comportement de combustion sur-stoechiométrique, les gaz créés par les flammes étant mélangés entre eux jusqu'à une consommation de combustible au moins largement stoechiométrique dans le foyer (8) et le combustible secondaire étant introduit par les brûleurs secondaires (13) à travers respectivement une paroi latérale (9) d'un bec de brûleur (1, 23) dans un étage (7) qui comporte une surface de fond (12) et une surface de paroi (11, 11b), et qui se trouve dans le bec du brûleur (1) et par l'intermédiaire duquel les gaz d'oxydation primaires préchauffés sont conduits hors des régénérateurs (R1, R2) dans le foyer (8), **caractérisé en ce que** dans la phase de combustion du bec de brûleur respectif (1, 23), en supplément du gaz d'oxydation primaire circulant par l'intermédiaire de l'étage (7) et préchauffé dans les régénérateurs (R1, R2), un gaz d'oxydation secondaire, faisant partie du groupe de l'air, de l'air enrichi en oxygène et de l'oxygène est soufflé dans l'étage (7).

2. Procédé selon la revendication 1, **caractérisé en ce que** dans la phase de décharge de chaque bec de brûleur (1, 23) des gaz d'échappement du four lorsque le brûleur secondaire est éteint (13), un gaz d'oxydation faisant partie du groupe de l'air, de l'air enrichi en oxygène et de l'oxygène est soufflé également dans l'étage (7).

3. Procédé selon la revendication 1, **caractérisé en ce que** le gaz d'oxydation secondaire est introduit dans le centre du brûleur secondaire (13) dans l'étage (7).

4. Procédé selon la revendication 1, **caractérisé en ce que** le gaz d'oxydation secondaire est introduit hors du brûleur secondaire (13), à travers la paroi latérale (9) dans l'étage (7).

5. Procédé selon la revendication 1, **caractérisé en ce que** le gaz d'oxydation secondaire est introduit dans l'étage (7) à travers la surface du sol (12) de ce dernier.

6. Procédé selon la revendication 1, **caractérisé en ce que** le gaz d'oxydation secondaire est introduit dans l'étage (7), directement à l'avant de la surface de paroi (11, 11b) de ce dernier.

7. Procédé selon la revendication 1, **caractérisé en ce que** le gaz d'oxydation secondaire est introduit dans l'étage (7) à travers la surface de paroi (11, 11b) de ce dernier.

8. Procédé selon les revendications 5 et 7, **caractérisé en ce que** le gaz d'oxydation secondaire est introduit dans l'étage (7) aussi bien par la surface du fond (12) que par la surface de paroi (11, 11b) de ce dernier.

9. Procédé selon l'une quelconque des revendications 4 à 7, **caractérisé en ce que** du carburant est mélangé au gaz d'oxydation secondaire.

10. Procédé selon la revendication 1, **caractérisé en ce que** lors de l'utilisation de combustibles gazeux, le rapport de quantité du combustible secondaire à la quantité du combustible primaire est choisie entre 5 et 30 % en volume, de préférence entre 10 et 20 % en volume.

11. Procédé selon la revendication 1, **caractérisé en ce que** dans la phase de combustion, le rapport de quantité de la fraction d'oxygène du gaz d'oxydation secondaire introduit dans l'étage (7) à la fraction d'oxygène du gaz d'oxydation primaire alimenté par le bec de brûleur (1, 23), préchauffé dans les régénérateurs (R1, R2) est choisi entre 0,5 et 2,5.

12. Procédé selon la revendication 1, **caractérisé en ce que** le rapport de quantité du gaz d'oxydation secondaire introduit dans l'étage (7) pendant la phase de combustion au gaz d'oxydation secondaire introduit dans l'étage (7) pendant la phase de décharge est choisi entre 0,5 et 1,5, de préférence entre 0,8 et 1,2.

13. Procédé selon au moins l'une des revendications 1 à 12, **caractérisé en ce que** le rapport de quantité des gaz d'oxydation secondaire est réglé par des soufflantes réglables (32, 33).

14. Agencement pour chauffer des fours de verrerie avec un foyer (8) avec des régénérateurs (R1, R2) pour le réchauffement de gaz d'oxydation faisant partie du groupe de l'air, de l'air enrichi en oxygène et de l'oxygène et avec des becs de brûleurs (1, 23) débouchant dans le foyer (8), ainsi qu'avec des brûleurs primaires (4, 5, 6) en tant que chauffage de l'autel inférieur (3) et avec des brûleurs secondaires (13), qui par rapport aux brûleurs primaires (4, 5, 6) forment un agencement en cascade, les brûleurs secondaires (13) étant disposés en tant que brûleurs en cascade dans respectivement une paroi latérale (9) d'un bec de brûleur (1, 23) dans un étage (7) qui comporte une surface de fond (12) et une surface de paroi (11, 11b) et qui se trouve dans le bec de brûleur (1), l'agencement comportant un dispositif de renversement pour un renversement périodique des becs de brûleurs (1, 23) entre des phases de combustion et des phases de décharge,
**caractérisé en ce que**
a) dans au moins l'une des parois de délimitation de l'étage (7), au moins un dispositif d'alimentation faisant partie du groupe des lances à gaz d'oxydation (15) et embouchures (15a, 17, 17a) est disposé dans l'étage (7) pour l'introduction de gaz d'oxydation secondaires faisant partie du groupe de l'air, de l'air enrichi en oxygène et de l'oxygène et
b) le dispositif de renversement est conçu de façon à ce que pendant la phase de décharge des gaz d'échappement du four hors du foyer (8) dans les régénérateurs correspondants (R1, R2), l'introduction des gaz d'oxydation secondaires dans l'étage (7) puisse être au choix soit mise en marche, mise à l'arrêt ou réglée.

15. Agencement selon la revendication 14, **caractérisé en ce qu'**une lance à gaz d'oxydation (15) est disposée au centre du brûleur secondaire (13) pour l'introduction de gaz d'oxydation secondaire dans l'étage (7).

16. Agencement selon la revendication 14, **caractérisé en ce qu'**une lance à gaz d'oxydation (15) est disposée à l'extérieur du brûleur secondaire (13), dans la paroi latérale (9) de l'étage (7) pour l'introduction de gaz d'oxydation secondaire hors du brûleur secondaire (13).

17. Agencement selon la revendication 14, **caractérisé en ce qu'**au moins une embouchure (17) est disposée dans la surface du fond (12) de l'étage (7) pour l'introduction du gaz d'oxydation secondaire dans l'étage (7).

18. Agencement selon la revendication 17, **caractérisé en ce qu'**au moins l'embouchure (17) est disposée directement devant la surface de paroi (11, 11b) de l'étage (7).

19. Agencement selon la revendication 14, **caractérisé en ce qu'**au moins une embouchure (17a) est disposée dans la surface de paroi (11, 11b) de l'étage (7) pour l'introduction du gaz d'oxydation secondaire dans l'étage (7).

20. Agencement selon la revendication 14, **caractérisé qu'**au moins respectivement une embouchure (17, 17a) est disposée aussi bien dans la surface du fond (12) que dans la surface de paroi (11, 11b) de l'étage (7) pour l'introduction du gaz d'oxydation secondaire dans l'étage (7).

21. Agencement selon au moins l'une des revendications 14 à 20, **caractérisé en ce qu'**un corps moulé (16) est disposé dans le compartiment de l'étage, sur l'extrémité de l'étage (7) qui est opposée au brûleur secondaire (13) pour la protection de la paroi latérale(10) du bec de brûleur (1) contre la flamme du brûleur secondaire.

22. Agencement selon au moins l'une des revendications 14 à 21, **caractérisé en ce que** des soufflantes réglables (32, 33) sont prévues pour l'introduction des gaz d'oxydation secondaires dans l'étage (7).
